# EUROPEAN PATENT APPLICATION

(11) **EP 3 176 070 A1**
(43) Date of publication of application: **07.06.2017**
(21) Application number: 15827209.6
(22) Date of filing: 20.07.2015
(51) Int. Cl.: B63H 21/38, F02D 19/06, F02M 21/02, F02M 37/04

(54) **FUEL SUPPLY CONTROL SYSTEM AND CONTROL METHOD**

(30) Priority: 31.07.2014 KR 20140098293
(71) Applicant: Daewoo Shipbuilding & Marine Engineering Co., Ltd., Seoul 100-180 (KR)
(72) Inventor: LEE, Joon Chae, Seoul 04577 (KR); KANG, Dong Eok, Busan 46743 (KR); PARK, Cheong Gi, Seongdong-gu, Seoul 04788 (KR)
(74) Representative: Intès, Didier Gérard André
(86) International application number: PCT/KR2015/007498
(87) International publication number: WO 2016/017974

(57) **Abstract**

A fuel supply control system and control method are disclosed. In a fuel supply control system of a high-pressure gas injection engine provided in a ship or an offshore structure, the fuel supply control system of the present invention includes: a gas supply mode for supplying gas to the high-pressure gas injection engine through a gas supplying part for receiving LNG from a storage tank so as to compress and vaporize the LNG; and an oil supply mode for supplying oil as fuel to the high-pressure gas injection engine, wherein the mode is switched into the oil supply mode during an emergency including a device malfunction in the gas supply mode such that the oil supply mode can be configured as a redundancy of the gas supply mode.

## Description

### [Technical Field]

The present invention relates to a fuel supply control system and method and, more particularly, to a fuel supply control system for a high-pressure gas injection engine provided to a ship or an offshore structure, which includes: a gas supply mode in which gas is supplied to the high-pressure gas injection engine through a gas supply unit compressing and vaporizing LNG supplied from a storage tank; and an oil supply mode in which oil is supplied as a fuel to the high-pressure gas injection engine, wherein, when an emergency such as equipment failure occurs in the gas supply mode, the system is switched over to the oil supply mode such that the oil supply mode serves as redundancy for the gas supply mode, and a fuel supply control method for the same.

### [Background Art]

Recently, consumption of liquefied gas such as liquefied natural gas (LNG) and liquefied petroleum gas (LPG) has been rapidly increasing worldwide. Natural gas may be carried in a gaseous state via onshore or offshore gas piping, or may be stored in a liquefied state in a liquefied gas carrier and transported to a remote source of demand. Liquefied gas such as LNG or LPG is obtained by cooling natural gas or petroleum gas and is much more suitable for storage and transportation because the volume thereof is significantly reduced than in a gaseous state.

In particular, LNG is a colorless transparent liquid which can be obtained by cooling natural gas containing methane as a main component to about -162°C, and has a volume of about 1/600 that of natural gas. Thus, liquefaction of natural gas into LNG enables very efficient transportation of natural gas. For example, LNG carriers are used to transport (carry) LNG by sea.

Recently, a DF engine capable of being fueled by both oil and LNG has been developed as a propulsion system of ships such as LNG carriers and is being applied to ships and the like.

### [Disclosure]

### [Technical Problem]

A ship must be prepared to prevent interruption of operation due to malfunction of an engine fueling system.

Thus, in the case where a high-pressure gas injection engine is incorporated into a propulsion system, when BOG generated from LNG is supplied as a fuel to the engine, two sets of compressors must be provided, and when LNG is compressed by a high-pressure pump and supplied as a fuel to the engine, two sets of high-pressure pumps are provided in preparation for equipment failure.

However, it is not efficient in terms of installation cost and space utilization to have spare equipment that is not normally used in case of equipment failure.

Embodiments of the present invention have been conceived to solve such a problem in the art and provide a fuel supply control system which can prevent interruption of operation of a ship due to equipment failure without additional installation costs.

### [Technical Solution]

In accordance with one aspect of the present invention, there is provided a fuel supply control system for a high-pressure gas injection engine provided to a ship or an offshore structure, including:
a gas supply mode in which gas is supplied to the high-pressure gas injection engine through a gas supply unit compressing and vaporizing LNG supplied from a storage tank; and
an oil supply mode in which oil is supplied as a fuel to the high-pressure gas injection engine,
wherein, when an emergency including equipment failure occurs in the gas supply mode, the system is switched over to the oil supply mode such that the oil supply mode serves as redundancy for the gas supply mode.

Preferably, the gas supply unit includes a high-pressure pump receiving and compressing LNG and a vaporizer vaporizing the LNG compressed by the high-pressure pump.

Preferably, the oil supply mode serves as redundancy of the gas supply mode so as to allow the gas supply unit to omit an additional high-pressure pump dedicated to redundancy.

Preferably, the gas supply unit includes a plurality of high-pressure pumps.

Preferably, the high-pressure gas injection engine is capable of being fueled by at least one of oil and re-gasified LNG compressed to a pressure of 150 bar to 400 bar.

In accordance with another aspect of the present invention, there is provided a fuel supply control method for a high-pressure gas injection engine provided to a ship or an offshore structure, including:
operating a fuel supply control system in a gas supply mode in which gas is supplied to the high-pressure gas injection engine through a gas supply unit compressing and vaporizing LNG supplied from a storage tank; and
switching the system to an oil supply mode in which oil is supplied as a fuel to the high-pressure gas injection engine when an emergency such as equipment failure occurs in the gas supply mode.

Preferably, the gas supply unit includes a high-pressure pump receiving and compressing LNG and a vaporizer vaporizing the LNG compressed by the high-pressure pump, wherein the oil supply mode serves as redundancy for the gas supply mode so as to allow the gas supply unit to omit an additional high-pressure pump dedicated to redundancy.

### [Advantageous Effects]

According to the present invention, it is possible to provide a fuel supply control system which is designed to be switched over to an oil supply mode when malfunction occurs in a gas supply unit in a gas supply mode such that the oil supply mode serves as redundancy for the gas supply mode.

Thus, it is possible to eliminate a need for redundant equipment which is not normally used and is provided only for redundancy, thereby reducing installation costs and improving economic efficiency and space efficiency of a ship while preventing interruption of operation of the ship in the event of equipment failure and the like.

### [Description of Drawings]

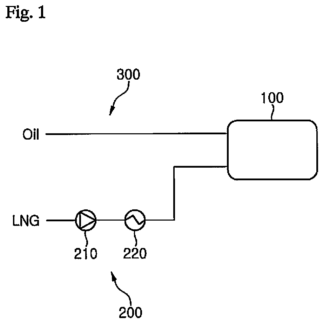

Fig. 1 is a schematic view of a fuel supply control system according to one embodiment of the present invention.

### [Best Mode]

The above and other aspects, features, and advantages of the present invention will become apparent from the detailed description of the following embodiments in conjunction with the accompanying drawings.

Hereinafter, exemplary embodiments of the present invention will be described in detail with reference to the accompanying drawings. It should be noted that like components will be denoted by like reference numerals throughout the specification and the accompanying drawings.

Fig. 1 is a schematic view of a fuel supply control system according to one embodiment of the present invention.

Referring to Fig. 1, a fuel supply control system according to one embodiment of the invention is used for a high-pressure gas injection engine 100 provided to a ship or an offshore structure and includes: a gas supply mode in which gas is supplied to the high-pressure gas injection engine 100 through a gas supply unit 200 compressing and vaporizing LNG supplied from a storage tank; and an oil supply mode in which oil is supplied as a fuel to the high-pressure gas injection engine 100, wherein when an emergency such as equipment failure occurs in the gas supply mode, the system is switched over to the oil supply mode such that the oil supply mode serves as redundancy for the gas supply mode.

The high-pressure gas injection engine 100 according to this embodiment is an engine fueled by natural gas and oil such as heavy fuel oil (HFO), marine diesel oil (MDO), or marine gas oil (MGO) and may be, for example, an ME-GI engine capable of being fueled by at least one of oil and re-gasified LNG compressed to a pressure of 150 bar to 400 bar. The high-pressure gas injection engine may include one or more ME-GI engines as a marine propulsion engine.

The ME-GI engine is an engine that can be used in ships and, more particularly, a high-pressure natural gas injection engine for LNG carriers, developed to reduce nitrogen oxide (NOₓ) and sulfur oxide (SOₓ) emissions. The ME-GI engine may be provided to offshore structures such as LNG carriers that stores liquefied natural gas (LNG) in a cryogenic storage tank to carry the LNG and is fueled by natural gas and oil. In addition, the ME-GI engine requires a high gas-supply pressure of about 150 bara to 400 bara (absolute pressure) depending on the load and is attracting attention as a next-generation eco-friendly engine that can reduce pollutant emissions by 23% for carbon dioxide, 80% for nitrogen compounds, and 95% for sulfur compounds, as compared with diesel engines with equivalent output.

In addition to the ME-GI engine, the high-pressure gas injection engine 100 may be a DF engine such as a dual fuel diesel electric engine (DFDE) or a dual fuel diesel generator (DFDG). The DF engine is also an engine that can be fueled by heavy oil and natural gas, emits exhaust gas having relatively low sulfur oxide content due to low content of sulfur in fuel, as compared with an engine fueled by heavy oil alone, and is supplied with a lower pressure gas than the ME-GI engine. Although an operating pressure of the DF engine may vary depending on licensor and size, the DF engine is generally supplied with natural gas having a pressure of 2.5 bara to 15 bara, preferably 5 bara to 7 bara.

When the high-pressure gas injection engine is a double or triple-fueled engine such as the DF engine or the ME-GI engine, the high-pressure gas injection engine includes two fuel supply systems, that is, the gas supply unit 200 supplying natural gas as a fuel and an oil supply unit 300 supplying diesel fuel. The oil supply unit may be driven, for example, to inject an ignition oil to improve engine ignition.

The fuel supply control system is set to operate in the gas supply mode when gas is basically supplied through the gas supply unit 200 and to operate in the oil supply mode when oil is supplied as a fuel through the oil supply unit 300.

For supply of high-pressure gas to the high-pressure gas injection engine 100, the gas supply unit 200 includes a high-pressure pump 210 receiving and compressing LNG to a pressure required for the engine and a vaporizer 220 vaporizing the LNG compressed by the high-pressure pump 210. According to this embodiment, since the oil supply mode serves as redundancy of the gas supply mode, the gas supply unit 200 may not include an additional high-pressure pump 210 dedicated to redundancy.

When the high-pressure gas injection engine is an ME-GI engine, LNG is compressed to a pressure of 150 bara to 400 bara by the high-pressure pump 210, forcibly vaporized by the vaporizer 220, and suppled to the high-pressure gas injection engine 100.

Here, since the LNG gas compressed by the high-pressure pump 210 is in a supercritical state above the critical temperature and critical pressure thereof, vaporization of LNG by the vaporizer 220 does not mean that the LNG undergoes phase change from liquid to gas, but rather means that thermal energy is supplied to the compressed LNG.

When an abnormality occurs in equipment such as the high-pressure pump 210 during supply of LNG through the high-pressure pump 210, fuel supply cannot be provided smoothly, making it difficult to operate a ship. In order to prevent this problem, the ship is provided with redundant equipment to constitute redundancy.

As used herein, the term "redundancy" refers to provision of duplicate equipment, which is in a standby state when main equipment operates to perform a requested function, and which takes over and performs the function when the main equipment fails due to malfunction and the like. The redundant equipment is mainly provided for equipment rotated to meet this redundancy requirement. In this embodiment, the high-pressure pump 210 of the gas supply unit 200 corresponds to the redundancy equipment. According to this embodiment, the fuel supply control system is designed to be automatically switched over to the oil supply mode when an abnormality occurs in the gas supply unit 200 in the gas supply mode, without duplication of the high-pressure pump 210 to meet a redundancy requirement.

As such, the oil supply mode serves as redundancy of the gas supply unit 200 including the high-pressure pump 210, that is, redundancy of the gas supply mode, thereby eliminating a need for redundant equipment that is not normally used and is provided solely to meet the redundancy requirement, whereby it is possible to prevent operation of the ship from being interrupted in the event of equipment failure while reducing installation costs and increasing space efficiency of the ship.

However, it should be understood that a plurality of high-pressure pumps 210 may be provided to constitute redundancy.

In accordance with another aspect of the present invention, there is provided a fuel supply control method for a high-pressure gas injection engine 100 provided to a ship or an offshore structure, including: operating a fuel supply control system in a gas supply mode in which gas is supplied to the high-pressure gas injection engine through a gas supply unit compressing and vaporizing LNG supplied from a storage tank; and switching the system to an oil supply mode in which oil is supplied as a fuel to the high-pressure gas injection engine when an emergency such as equipment failure occurs in the gas supply mode.

As such, the oil supply mode serves as redundancy for the gas supply mode, thereby eliminating a need for provision of a high-pressure pump 210 dedicated to redundancy to the gas supply unit 200, whereby it is possible to reduce installation costs and to increase space efficiency of the ship while meeting a redundancy requirement.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the spirit and scope of the invention.

## Claims

1. A fuel supply control system for a high-pressure gas injection engine provided to a ship or an offshore structure, comprising:
a gas supply mode in which gas is supplied to the high-pressure gas injection engine through a gas supply unit compressing and vaporizing LNG supplied from a storage tank; and
an oil supply mode in which oil is supplied as a fuel to the high-pressure gas injection engine,
wherein, when an emergency comprising equipment failure occurs in the gas supply mode, the system is switched over to the oil supply mode such that the oil supply mode serves as redundancy for the gas supply mode.

2. The fuel supply control system according to claim 1, wherein the gas supply unit comprises a high-pressure pump receiving and compressing LNG and a vaporizer vaporizing the LNG compressed by the high-pressure pump.

3. The fuel supply control system according to claim 2, wherein the oil supply mode serves as redundancy of the gas supply mode so as to allow the gas supply unit to omit an additional high-pressure pump dedicated to redundancy.

4. The fuel supply control system according to claim 2, wherein the gas supply unit comprises a plurality of high-pressure pumps.

5. The fuel supply control system according to claim 1, wherein the high-pressure gas injection engine is capable of being fueled by at least one of oil and re-gasified LNG compressed to a pressure of 150 bar to 400 bar.

6. A fuel supply control method for a high-pressure gas injection engine provided to a ship or an offshore structure, comprising:
operating a fuel supply control system in a gas supply mode in which gas is supplied to the high-pressure gas injection engine through a gas supply unit compressing and vaporizing LNG supplied from a storage tank; and
switching the system to an oil supply mode in which oil is supplied as a fuel to the high-pressure gas injection engine when an emergency such as equipment failure occurs in the gas supply mode.

7. The fuel supply control method according to claim 6, wherein the gas supply unit comprises a high-pressure pump receiving and compressing LNG and a vaporizer vaporizing the LNG compressed by the high-pressure pump, and
wherein the oil supply mode serves as redundancy for the gas supply mode so as to allow the gas supply unit to omit an additional high-pressure pump dedicated to redundancy.
